# EUROPEAN PATENT SPECIFICATION

(11) **EP 3 891 370 B1**
(45) Date of publication and mention of the grant of the patent: **14.05.2025**
(21) Application number: 19816531.8
(22) Date of filing: 03.12.2019
(51) Int. Cl.: F01N 9/00, F01N 3/20, F01N 13/00

(54) **STARTUP FLOW CONTROL ROUTINE IN EXHAUST GAS TREATMENT SYSTEM**
STARTFLUSSSTEUERUNGSROUTINE IN EINEM ABGASBEHANDLUNGSSYSTEM
ROUTINE DE COMMANDE DE FLUX DE DÉMARRAGE DANS UN SYSTÈME DE TRAITEMENT DE GAZ D'ÉCHAPPEMENT

(30) Priority: 04.12.2018 GB 201819804
(43) Date of publication of application: 13.10.2021
(73) Proprietor: Caterpillar Energy Solutions GmbH, 68167 Mannheim (DE)
(72) Inventor: KLINKNER, Martin, 68167 Mannheim (DE)
(74) Representative: Novagraaf Group
(86) International application number: PCT/EP2019/025431
(87) International publication number: WO 2020/114629

(56) References cited:
- US-A1- 2010 199 643
- US-A1- 2016 251 989

## Description

### Technical Field

This disclosure relates to systems in which exhaust gas flows through a gas permeable body to remove pollutants, wherein the gas permeable body is heated by the exhaust gas flow to an operating temperature. The gas permeable body will often comprise a unitary block of ceramic material having a relatively low thermal conductivity, and may function for example as a substrate for a catalyst, e.g. for oxidation or selective catalytic reduction (SCR), and/or as a particulate filter.

### Background

In smaller engines (including many automotive engines) the gas permeable body may consist of a single unitary block, which may be cylindrical with a circular cross-section normal to the flow direction so that it can be mounted in a cylindrical housing. **In** larger engines (including for example ship's engines and large, stationary engines) the gas permeable body may consist of a plurality of unitary blocks which are often square or rectangular in cross-section so that they can conveniently be assembled together in a square or rectangular housing.

Each block will be heated by the exhaust gas, and often also by an additional heating arrangement, to an operating temperature which (depending on the function of the block) may be critical to the treatment process. For example, when configured as a substrate for an SCR catalyst, the or the block may need to reach a temperature of about 250deg.C. before it is fully functional.

When an engine is started with a cold exhaust system, the block will take some time before it reaches its minimum operating temperature, and during this time the exhaust treatment will be less effective. This period may be prolonged by the operating conditions of the engine. For example, when a vehicle starts from cold it may idle for a short period before moving slowly out of its parking space and through an off-road area before joining the open road, and during this time the exhaust flow rate will be relatively low. For this reason, additional heating means may be provided in order to raise the block more quickly to its minimum operating temperature.

Exhaust gas treatment systems may comprise two or more such gas permeable bodies supporting two different catalysts and arranged, either in a common housing or in separate housings. In such arrangements, the exhaust gas flow may be diverted between the different bodies responsive to input from sensors which determine the temperature of the exhaust gas flow and of each of the gas permeable bodies. This makes it possible also to calculate the temperature gradient across each gas permeable body in the flow direction, and so to determine what proportion of the total mass of the block has reached its minimum operating temperature.

In SCR systems, injection of an aqueous solution of urea as a reducing agent when the catalyst substrate is below its minimum operating temperature not only is ineffective in reducing nitrogen oxide (NOx) emissions but also can result in ammonia slip, which is to say, the addition of unreacted ammonia to the exhaust gas discharged to the environment.

These conditions may be mitigated by diverting the exhaust gas flow so as to ensure correct operation of different catalysts which may be effective at different minimum operating temperatures.

For example, US9657621B2 teaches an exhaust gas treatment system having a heater upstream of a valve which distributes the exhaust gas flow in parallel between two substrate blocks having different SCR catalysts. The two substrates may be arranged in separate housings or in a common housing with the valve (e.g. a flow plate) selectively distributing the flow between them, optionally having an electric heater embedded between the blocks to increase the temperature of the device more quickly upon a cold start. The upstream heater is controlled, and the exhaust gas flow is selectively routed between the two substrates, inter alia to raise to a target temperature an extent or fraction of each block which may be determined using a catalyst partial volume model based on a sensed temperature differential between the front and back faces of the block. The controller is configured to provide continual operation of the exhaust system with a higher efficiency across the operational range of the vehicle as a function of temperature.

US20100199643A1 teaches an exhaust gas treatment system in which the exhaust gas flow is directed by a valve, responsive to sensor input, to two parallel housings containing respectively a high temperature and a low temperature SCR catalyst.

DE19957539A1 similarly teaches an exhaust gas treatment system in which the exhaust gas flow is directed by a valve, depending on the sensed exhaust gas temperature, alternatively to two parallel housings containing two different reduction catalysts. Document US2016251989 A1 discloses a similar exhaust system.

### Summary

In accordance with the present invention there are provided an apparatus as defined in claim 1, and a method as defined in claim 9, for treating a flow of exhaust gas. The dependent claims define optional features.

The apparatus includes at least one gas permeable body, a flowpath, and a flow diverter mechanism.

The gas permeable body has at least one upstream surface, at least one downstream surface, and a total section area normal to the flow.

The flowpath directs the flow to enter the at least one gas permeable body via the at least one upstream surface and to flow through the at least one gas permeable body from the at least one upstream surface to the at least one downstream surface to heat the at least one gas permeable body to an operating temperature.

The flow is selectively diverted between at least first and second regions of the at least one gas permeable body, the first and second regions defining respective, first and second portions of the total section area.

In accordance with the invention, referred to as the first aspect of the disclosure, when commencing treatment from a cold condition of the at least one gas permeable body, the apparatus is arranged or operated:
(i) to direct at least a major proportion of the flow through at least the first region but not the second region to heat the first region to the operating temperature; and then, after the first region has reached the operating temperature,
(ii) to direct at least a major proportion of the flow through at least the second region but not the first region to heat the second region to the operating temperature; and then, after the second region has reached the operating temperature,
(iii) to reduce the proportion of the flow through the second region and to direct a proportion of the flow through the first region so that the flow is shared between the first and second regions.

Preferably the first and second regions are coupled in thermally conductive relation.

In accordance with another arrangement, disclosed but not claimed and referred to as the second aspect of the disclosure, either
(a) the at least one gas permeable body comprises a unitary block of gas permeable material, the unitary block including both of the first and second regions, or
(b) the first and second regions are coupled in thermally conductive relation, and a first catalyst is distributed in or on the at least one gas permeable body across both of the first and second regions.

Further in accordance with the second aspect, not claimed, when commencing treatment from a cold condition of the at least one gas permeable body, the apparatus is operated:
(i) to direct at least a major proportion of the flow through at least the first region but not the second region to heat the first region to the operating temperature; and then, after the first region has reached the operating temperature,
(ii) to reduce the proportion of the flow through the first region so that the flow is shared between the first and second regions.

In either aspect of the disclosure, the first and second regions may comprise respectively, first and second assemblies of gas permeable blocks, the flow diverter mechanism being configured to selectively isolate each of the first and second assemblies to permit removal and replacement of each respective one of the first and second assemblies while the flow is diverted through at least the other respective one of the first and second assemblies. In this case, the flowpath may be divided by a barrier wall between a first flowpath portion extending through the first assembly, and a second flowpath portion extending through the second assembly, the first and second assemblies being thermally coupled together via the barrier wall.

The novel apparatus may include an exhaust gas source, such as a combustor or internal combustion engine, from which the exhaust gas flows. Preferably the exhaust gas source is operable at not less than 60% of full capacity when all of the flow of exhaust gas from the exhaust gas source is directed through at least the first region but not the second region.

### Brief Description of the Drawings

Further features and advantages will be apparent from the following illustrative embodiments which will now be described, purely by way of example and with reference to the accompanying drawings, in which:
Fig. 1 is a cross-section through a partially heated gas permeable body comprising an SCR catalyst showing the distribution of unreacted ammonia;
Fig. 2 is a top view of a first exhaust gas treatment apparatus in accordance with a first embodiment, with the housing partially cut away to show first and second gas permeable bodies arranged in parallel flow relation;
Fig. 3 is a side view of the first apparatus with the housing partially cut away, and with the casing of the second gas permeable body partially cut away to reveal the gas permeable blocks;
Fig. 4 is an enlarged view of part of Fig. 2;
Fig. 5 is a cross-section through the housing including the first and second gas permeable bodies at the section plane V-V of Figs. 2, 3 and 4 normal to the flow direction F1;
Fig. 6 shows the first and second gas permeable bodies before assembly into the housing, each body being sectioned in the same plane as Fig. 5;
Fig. 7 is a longitudinal section through a second exhaust gas treatment apparatus in accordance with a second arrangement, not claimed, showing inlet and outlet ducts in a first, extended position;
Fig. 8 shows the second apparatus with the inlet and outlet ducts in a second, retracted position;
Fig. 9 is a cross-section through the second apparatus at IX-IX of Fig. 7, showing the upstream surface of the first region of the block which has been heated by the flow;
Fig. 10 is a cross-section through the second apparatus at X-X of Fig. 7, showing the first portion of the total section area of the block defined by the heated first region;
Fig. 11 is a cross-section through the second apparatus at XI-XI of Fig. 8, showing the upstream surface of the block which has been heated by the flow in both the first and second regions;
Fig. 12 is a cross-section through the second apparatus at XII-XII of Fig. 8, showing the total section area of the block consisting of the first and second portions which are defined by the heated, first and second regions;
Fig. 13 shows the startup routine of the first apparatus in accordance with the first aspect of the disclosure; and
Fig. 14 shows the startup routine of the first or second apparatus in accordance with the second aspect of the disclosure, not claimed.

Reference numerals or characters appearing in more than one of the figures indicate the same or corresponding parts in each of them.

### Detailed Description

The disclosure recognises that effective operation of a catalyst may depend, not only on how much of the substrate block (as a proportion of its total volume or mass), and hence, how much of its total surface area available for catalytic reaction has reached the minimum operating temperature of the catalyst, which in turn will reflect the temperature gradient across the block in the flow direction, but also on the flow distribution across the section area of the block normal to the flow direction.

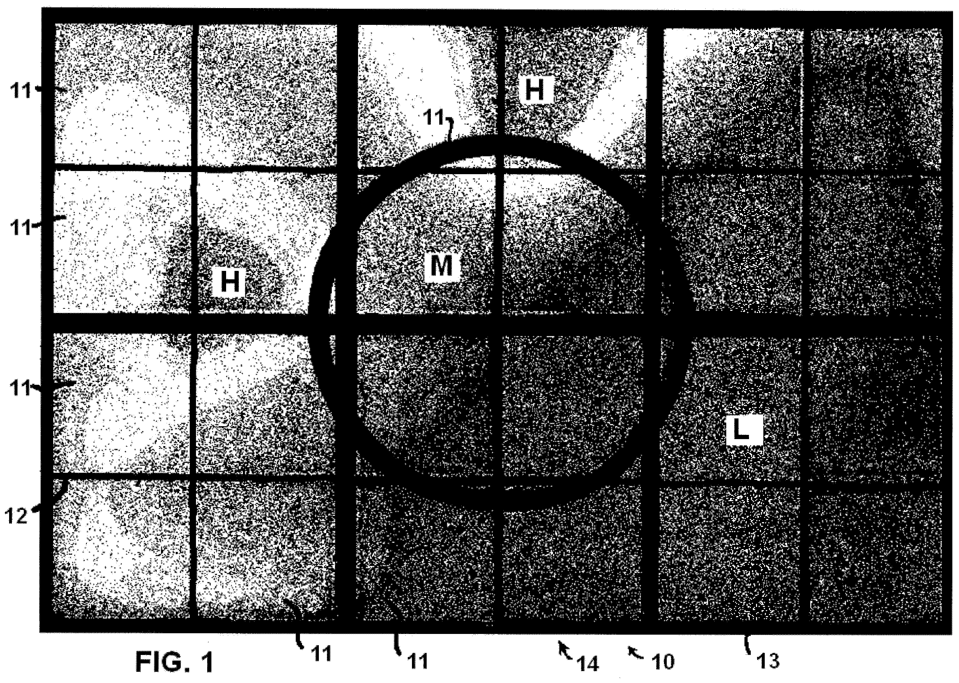

By way of illustration, Fig. 1 is a cross-section through a partially heated gas permeable body 10 formed as an assembly of twenty-four unitary gas permeable blocks 11 mounted in a supporting frame or matrix 12 within a housing 13 and configured as a substrate for an SCR catalyst 14. The assembly is located downstream of a source of reducing agent, e.g. an aqueous solution of urea, hereinafter referred to as diesel exhaust fluid or DEF. The section is taken normal to the exhaust gas flow direction F1 and shows the distribution of unreacted ammonia across the rectangular section area of the gas permeable body 10 normal to the gas flow direction F1. The uneven distribution of unreacted ammonia with regions of high (H), medium (M) and low (L) concentration in turn reflects temperature variations over the section area of the gas permeable body 10.

The circular cross-section of the exhaust gas inlet duct 17 upstream of the assembly is superimposed on the section of the gas permeable body 10, from which it can be seen that the total section area of the gas permeable body 10, which is defined as the combined area of all of the twenty-four gas permeable blocks 11 in the plane of the section, is about 5.5 times the section area of the exhaust gas inlet duct 17.

While the disclosure is not bound by theory, it is believed that an uneven temperature distribution as shown may be expected particularly when the exhaust gas source (e.g. an internal combustion engine 1) begins to operate at part load after starting with an exhaust system that is in a cold condition. In this specification, a cold condition means a condition below the minimum operating temperature of the gas permeable body 10.

Under such conditions the relatively low flow rate (relative to the maximum design flow rate) produces a reduced static pressure upstream of the gas permeable body, which in turn allows the exhaust gas to follow a more localised path through the gas permeable body. The exact path taken will depend on the flow characteristics of the assembly and may be influenced for example by the design of the housing as well as by transient changes in the distribution of any particulate contaminants in the block or blocks 11, but in any case may be expected to cause a relatively faster rise in temperature in the region of faster flow while other areas of the gas permeable body heat up more slowly.

In this condition, both unreacted NOx and (if DEF injection has started) unreacted ammonia may continue to pass through the cooler regions of the gas permeable body and so to the final exhaust outlet, even after the rest of the gas permeable body has reached its minimum operating temperature. The cooler regions may persist for some time, which may limit the effectiveness of the exhaust gas treatment and increase ammonia slip.

In each aspect of the disclosure, for any given exhaust gas flow rate, the novel startup routine first increases the proportion of the exhaust gas that flows through the first region of the gas permeable body. This may increase the static pressure upstream of the first region, which in turn may increase the mass flow rate through the first region across the whole of the section area of the first region normal to the gas flow direction F1. This in turn may raise the first region more quickly to its operating temperature across the whole of its section area, after which the flow may be diverted to the second region. In this way, the novel startup routine may allow a gas treatment system to reach a fully effective operating condition more quickly.

In embodiments, the at least one gas permeable body of the exhaust treatment system may comprise only one, or two, or more than two gas permeable bodies, with the or each gas permeable body being arranged in fixed relation in the exhaust gas flowpath. In this case a barrier wall or other flow directing element may be arranged to define respective, first and second regions of the at least one gas permeable body.

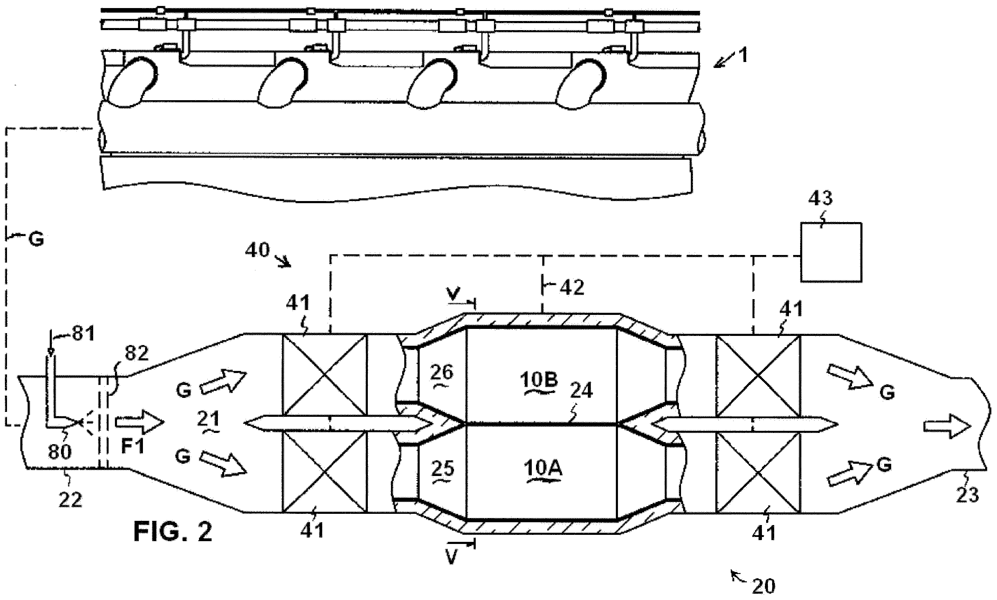

Alternatively, the at least one gas permeable body may be divided into two or more, separable gas permeable bodies, so that each of the gas permeable bodies may be separately removed from the flowpath, as illustrated by the first apparatus of Figs. 2 - 6 where two gas permeable bodies are provided.

In embodiments, the at least one gas permeable body may comprise three, four or more gas permeable bodies arranged in parallel flow relation. In this case, the flow of exhaust gas G may be diverted selectively between the three, four or more gas permeable bodies, each of which defines a respective region of the at least one gas permeable body, each region defining a respective portion of the total section area of the at least one gas permeable body.

For example, where three gas permeable bodies are provided, the flow may be diverted through the first and second regions defined by the first and second bodies to heat the first and second bodies to their operating temperature, and then through the second and third regions defined by the second and third bodies to heat the third body to its operating temperature, before directing the flow through all three bodies in parallel.

Referring now to Figs. 2 - 6, in the first apparatus 20 the at least one gas permeable body consists of two, first and second gas permeable bodies 10A and 10B which define respective, first and second regions of the at least one gas permeable body. Thus, the at least one gas permeable body of the apparatus 20 consists of its two separate, first and second regions.

The first apparatus 20 is supplied with exhaust gas G from an exhaust gas source 1, such as an internal combustion engine.

The first and second gas permeable bodies 10A, 10B are arranged in parallel flow relation in a flowpath 21 extending from an exhaust gas inlet duct 22 to an exhaust gas outlet duct 23. The flowpath 21 is divided by a thermally conductive barrier wall 24 into a first flowpath portion 25 and a second flowpath portion 26, the first and second flowpath portions being configured in parallel flow relation and fluidly separated by the barrier wall 24.

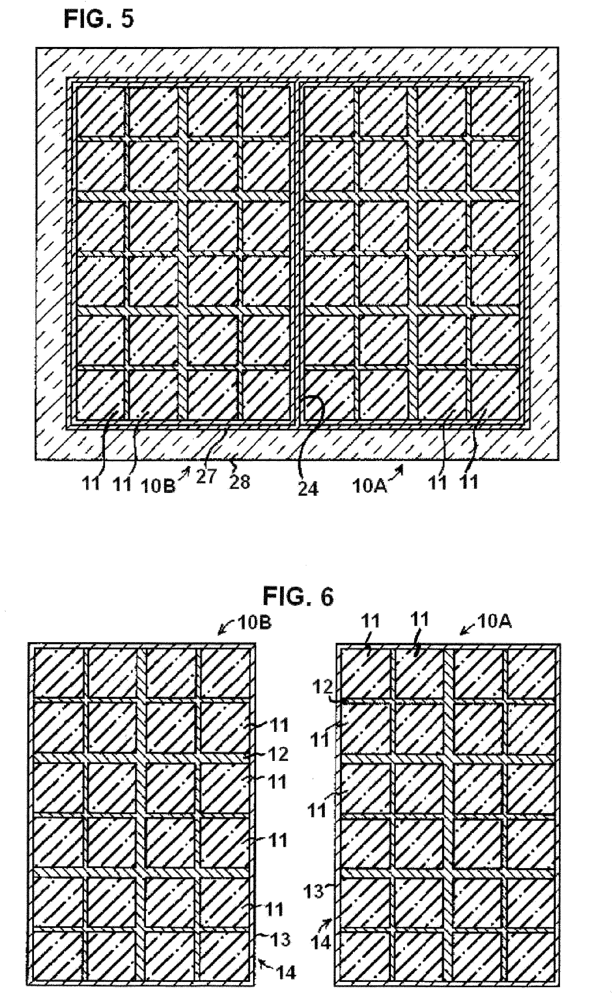

Each gas permeable body 10A, 10B may comprise an assembly of gas permeable blocks 11, which may have a noncircular cross section normal to the flow direction F1, and may be mounted in a supporting frame or matrix 12 within a thermally conductive housing 13, similar to the assembly of Fig. 1. A first catalyst 14, such as an SCR catalyst, may be distributed in or on the blocks 11 across the whole section area of both of the first and second gas permeable bodies 10A, 10B which form respectively the first and second regions of the at least one gas permeable body, as shown in Figs. 5 and 6. Thus, both gas permeable bodies 10A, 10B will become functionally effective at the same minimum operating temperature which is the minimum operating temperature of the first catalyst 14.

Where the system is configured as an SCR system, a reducing agent may be introduced into the exhaust gas flow upstream of the at least one gas permeable body. For this purpose a DEF injection nozzle or nozzles 80 may be arranged to inject DEF 81 from a pump (not shown), optionally via distributor plate 82, into the flow of exhaust gas G upstream of the gas permeable body or bodies.

The first and second gas permeable bodies 10A, 10B are arranged in use respectively in the first and second flowpath portions 25, 26, so that each of the first and second flowpath portions extends through the total section area of the twenty-four gas permeable blocks 11 of a respective one of the first and second gas permeable bodies 10A, 10B.

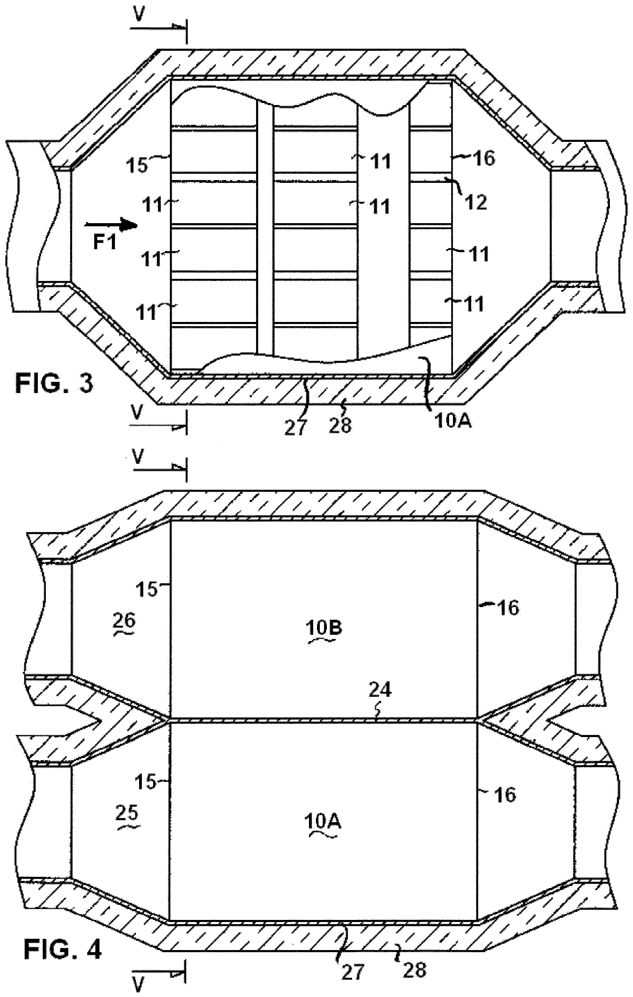

Referring to Fig. 3, it can be seen that in the illustrated embodiment the assembly of each gas permeable body 10A, 10B comprises three sub-assemblies, each comprising twenty-four gas permeable blocks 11, with the sub-assemblies being arranged in series, but with a constant cross-section, along the flow direction F1.

Each gas permeable body 10A, 10B has at least one upstream surface 15, at least one downstream surface 16, and a total section area normal to the flow direction F1 as shown in Figs. 5 and 6.

In their use position the first and second gas permeable bodies 10A, 10B are thermally coupled together via the barrier wall 24 within an outer housing 27 which is surrounded by thermal insulation 28.

In this position it can be seen that each of the two gas permeable bodies 10A, 10B presents a total section area, which is to say, a total cross-sectional area, in a section plane normal to the flow direction F1 of the flow of exhaust gas G in the respective, first or second flowpath portion 25, 26, as shown in Fig. 6.

The section area of each gas permeable body 10A, 10B is defined as the combined section area of all of the twenty-four gas permeable blocks 11 of the respective assembly in the plane normal to the flow direction F1.

As illustrated, both gas permeable bodies 10A, 10B may be of equal section area, and so the total combined section area of the at least one gas permeable body of the exhaust treatment apparatus, as shown in Fig. 5, is equal to twice the section area of each individual gas permeable body 10A, 10B, as shown in Fig. 6.

The total section area of the first gas permeable body 10A defines a first portion of the total section area of the at least one gas permeable body formed by the two gas permeable bodies 10A, 10B.

The total section area of the second gas permeable body 10B defines a second portion of the total section area of the at least one gas permeable body formed by the two gas permeable bodies 10A, 10B.

Thus, the total section area of the at least one gas permeable body consists of the first and second portions as shown in Fig. 6, which in turn are defined by its first and second regions, which is to say, the first and second gas permeable bodies 10A, 10B.

Referring to Fig. 2, a flow diverter mechanism 40 may comprise a movable baffle or baffles, one or more valves, or any other arrangement for directing the exhaust gas selectively towards each of the first and second gas permeable bodies 10A, 10B.

As illustrated, the flow diverter mechanism 40 may comprise isolation valves 41 arranged upstream and downstream of each flowpath portion 25, 26.

The isolation valves or other flow diverter mechanism may be configured to selectively isolate each of the first and second gas permeable bodies 10A, 10B.

Selective isolation of the gas permeable bodies may permit removal and replacement of each respective one of the first and second gas permeable bodies 10A, 10B (either with or without the respective portion of the outer housing 27) while the flow of exhaust gas G is diverted through at least the other respective one of the first and second gas permeable bodies 10A, 10B.

For example, each gas permeable body 10A, 10B may be separately removable and replaceable via a closable aperture (not shown) in the outer housing 27.

Alternatively, the entire outer housing 27 may be separable into two removable parts, each part including a respective one of the gas permeable bodies 10A, 10B.

A controller 43 may be arranged to operate the flow diverter mechanism 40 by actuating the valves 41 (e.g. by means of electric, pneumatic, or any other suitable actuators), for example, responsive to signals 42 from one or more sensors (not shown) which may sense the temperature of the exhaust gas G upstream and/or downstream of each gas permeable body 10A, 10B, the temperature of each gas permeable body, and/or any other system parameter. The controller 43 may comprise software stored in memory and running on a processor and may include a timer and/or a model representing the thermal response time and other static and dynamic characteristics of the system.

The two gas permeable bodies 10A, 10B are fluidly sealed in the respective flowpath portions so that the flowpath 21 directs the flow to enter the gas permeable bodies via their upstream surfaces 15 and to flow through each gas permeable body 10A, 10B from its upstream surface 15 to its downstream surface 16. As the exhaust gas flows through each assembly it heats the gas permeable body 10A or 10B to its minimum operating temperature.

The flow diverter mechanism 40 is arranged and operated to divert the flow of exhaust gas G selectively between the first and second regions comprising the first and second gas permeable bodies 10A, 10B which define the respective, first and second portions of the total section area normal to the flow direction F1 through which the exhaust gas G may flow.

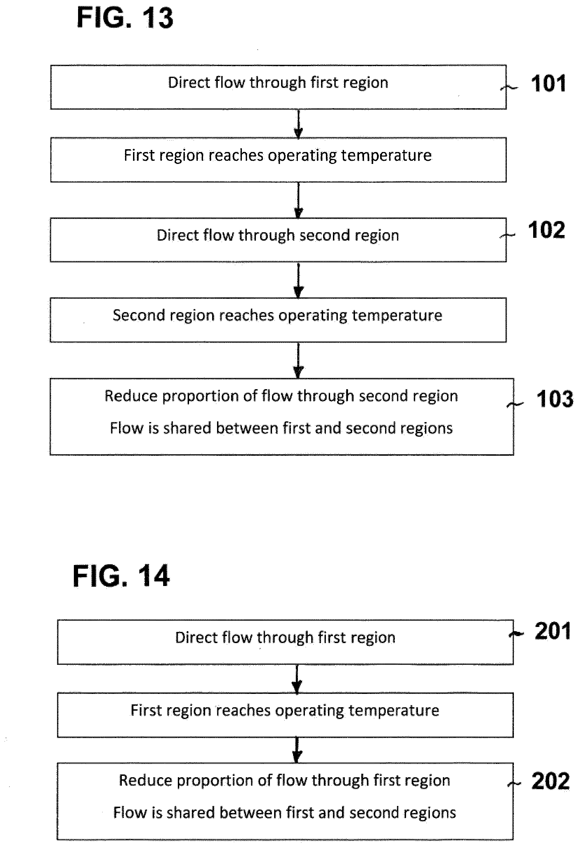

Referring to Fig. 13, when commencing treatment from a cold condition of the at least one gas permeable body, the controller 43 is configured to carry out the sequential steps 101, 102, and 103 as shown.

The flow diverter mechanism 40 is configured to direct at least a major proportion of the flow through different regions of the at least one gas permeable body. Where the flow diverter mechanism 40 is configured to isolate respective ones of the regions from the gas flow, the at least a major proportion of the flow may comprise all the flow or substantially all the flow.

Thus, in the illustrated embodiment, the isolation valves 41 are arranged to divert the whole of the flow so as to selectively isolate each one of the first and second gas permeable bodies 10A, 10B.

Where the at least one gas permeable body consists of two regions, the at least a major proportion of the flow, e.g. the whole of the flow, may be diverted entirely through, respectively, the first region or the second region.

In this case, each of the first and second regions may comprise sub-regions, for example, two or more individual gas permeable bodies, wherein the flow is diverted simultaneously to, or away from, both or each of the bodies of each region.

Alternatively, where the at least one gas permeable body consists of more than two regions - (for example, three regions) - the at least a major proportion of the flow, e.g. the whole of the flow, may be diverted through at least the first region - (which is to say, for example, through the first and third regions) - and then through at least the second region - (which is to say, for example, through the second and third regions).

Fig. 13 represents a startup routine suitable for the simple configuration of the first apparatus in which the whole of the flow is directed, respectively, through each of only two regions, while isolating the other region from the flowpath.

At step 101, valves 41 are operated to direct the flow entirely through the first gas permeable body 10A while isolating the second gas permeable body 10B.

Since the section area of the first gas permeable body 10A is only half of the total section area of the combined first and second gas permeable bodies 10A, 10B, the flow of exhaust gas G passes through the whole section area of the first gas permeable body 10A and heats it to its minimum operating temperature.

The controller 43 may sense the temperature of the first gas permeable body 10A directly or may calculate its temperature from the temperature of the exhaust gas G upstream and/or downstream of the gas permeable body 10A, e.g. by comparing the upstream and downstream temperatures. The calculation may be based on the thermal mass of the gas permeable body 10A, the temperature and/or flow rate of the exhaust gas G, and any other relevant parameters including the flow distribution over its section area or across its upstream and downstream surfaces as represented by an algorithm or model.

After the first region has reached its operating temperature, at step 102 the valves 41 are operated to direct the flow entirely through the second gas permeable body 10B while isolating the first gas permeable body 10A.

The flow of exhaust gas G passes through the whole section area of the second gas permeable body and heats the second gas permeable body 10B to its minimum operating temperature.

Alternatively a proportion of the flow may be allowed to pass through the first gas permeable body 10A while heating the second.

Since the first and second gas permeable bodies 10A, 10B are coupled in thermally conductive relation, the second gas permeable body may already be partially heated before commencing step 102, and so may reach its minimum operating temperature more quickly.

The increased proportion of the total flow passing through each of the first and second gas permeable bodies thus heats the entire section area of both bodies more quickly to the target operating temperature.

After the second region has reached the operating temperature, at step 103 the valves 41 are operated to reduce the proportion of the flow of exhaust gas G passing through the second gas permeable body 10B and to direct a proportion of the flow through the first gas permeable body 10A, so that the flow is shared between the first and second regions and the engine or other exhaust gas source 1 may then be operated on full load.

Where the exhaust gas treatment system is configured as a selective catalytic reduction (SCR) system, DEF injection may commence at step 103.

The above discussion of the features of the first embodiment (including "at least", "major proportion", "region", "portion" and other terms used herein) may be applied mutatis mutandis to the second embodiment and so for brevity will not be repeated.

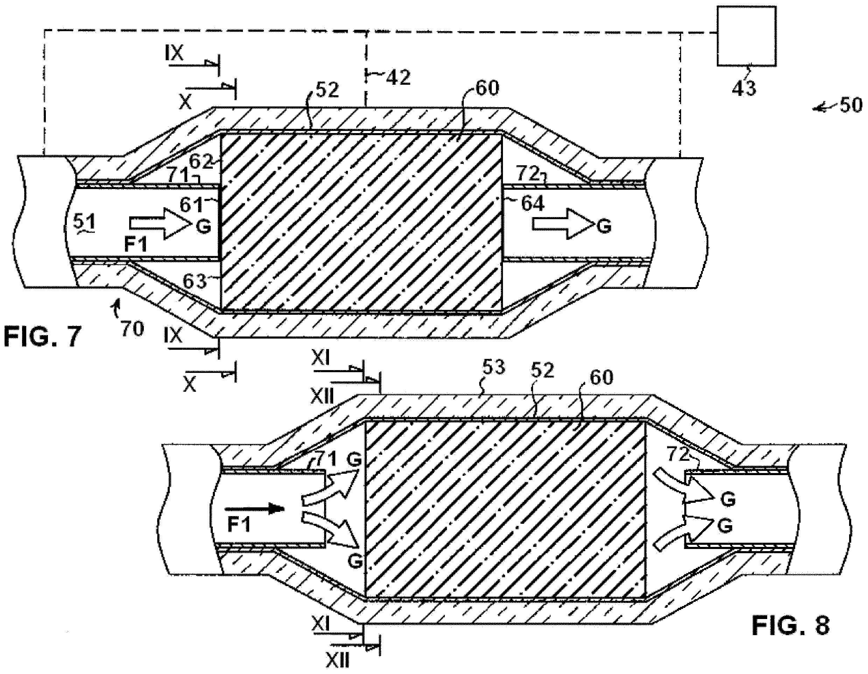

Referring now to Figs. 7 - 12, the second exhaust gas treatment apparatus 50 (not claimed) includes at least one gas permeable body 60, a flowpath 51, and a flow diverter mechanism 70.

The at least one gas permeable body 60 may consist of a unitary block of gas permeable material, which may be generally cylindrical with its length axis aligned with the flow direction F1 as shown.

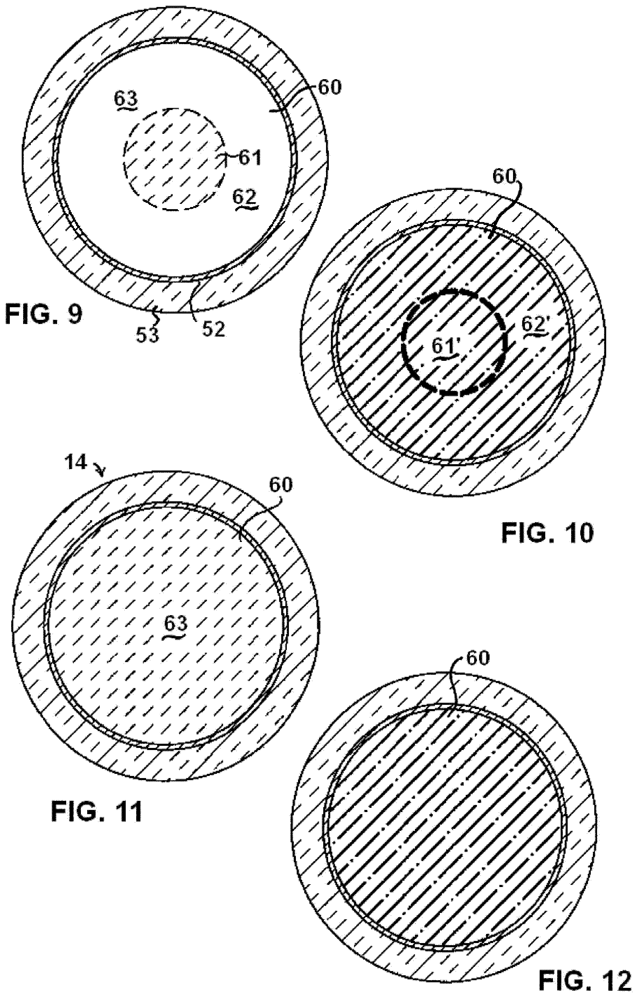

The unitary block of the gas permeable body 60 includes first and second regions 61, 62 as best seen in Figs. 9 and 10.

The unitary construction maximises thermal conduction between the first and second regions 61, 62 of the block, which may often be a poor thermal conductor.

Thermal conduction is further improved by configuring the second region 62 to surround the first region 61, for example as shown.

Where the gas permeable body 60 is configured as a substrate for a first catalyst, for example, an SCR catalyst, the first catalyst 14 may be distributed in or on the unitary gas permeable body 60 across both of its first and second regions 61, 62, as shown.

Thus, both of the first and second regions 61, 62 will have the same minimum operating temperature as defined by the first catalyst 14.

In alternative embodiments, the at least one gas permeable body may comprise structurally separate, first and second regions which are coupled in thermally conductive relation, with a first catalyst being distributed in or on the at least one gas permeable body across both of the first and second regions.

The gas permeable body 60 has at least one upstream surface 63, at least one downstream surface 64, and a total section area normal to the flow direction F1, as shown in Figs. 10 and 12 which show the section area in the plane X-X of Fig. 7, and in the same plane XII-XII of Fig. 8.

The block is contained in an outer housing 52 surrounded by thermal insulation 53. The housing 52 is cylindrical and so the total section area of the gas permeable body 60 is defined within the circular, radially inner surface of the housing 52, as shown. Of course, a needle mat or the like may be arranged around the block to seal it in the housing, but for clarity is not shown in the figures.

The housing 52 defines the exhaust gas flowpath which directs the flow of exhaust gas G to enter the gas permeable body 60 via the upstream surface 63 and to flow through the gas permeable body in the flow direction F1 from the upstream surface 63 to the downstream surface 64 to heat the gas permeable body 60 to its minimum operating temperature.

The flow diverter mechanism 70 is configured to selectively divert the flow of exhaust gas G between the first and second regions 61, 62 of the gas permeable body 60.

As explained with reference to the first embodiment, the first and second regions 61, 62 define respective, first and second portions 61', 62' of the total section area in a plane normal to the gas flow direction F1.

The first and second portions are best seen in Fig. 10 where the first portion 61' is defined by the radially inner, first region 61 which has been heated by the exhaust gas G, and the second portion 62' is defined by the radially outer, second region 62 which has not yet been heated, as shown by the shading in Fig. 9 which distinguished the heated and unheated regions at the upstream surface 63.

Thus, it can be seen that the annular, second portion 62' surrounds the circular, first portion 61'.

The flow diverter mechanism 70 may be configured, mutatis mutandis, generally as described with reference to the first embodiment, or may be adapted to divert the flow of exhaust gas G between the first and second regions 61, 62 when the first and second regions are arranged in an annular or concentric configuration, e.g. in a cylindrical gas permeable body 60, as in the illustrated embodiment.

In one possible configuration, the flow diverter mechanism may comprise one or both of a duct 71 through which the exhaust gas flows to the upstream surface 63, and a duct 72 through which the exhaust gas flows from the downstream surface 64. The or each duct may be adjustable to selectively divert the flow of exhaust gas G between the first and second regions.

Such adjustment could be accomplished for example by arranging a cylindrical sleeve (not shown) operable by an actuator, e.g. an electric or pneumatic actuator, to rotate around the or each duct 71, 72 (which may be fixed in a position similar to that shown in Fig. 7), wherein apertures are provided in the cylindrical wall both of the duct and the sleeve. By rotating the sleeve through an angular range about its central axis, the apertures are brought progressively into alignment to allow the exhaust gas G to pass through the wall of the duct 71 or 72 into (or from) the annular space surrounding the duct within the housing 52 and so to the upstream (or from the downstream) surface 63, 64 of the radially outer, second region 62 of gas permeable body 60.

In a closed position of the apertures, the duct(s) 71, 72 direct the flow via the inner flowpath portion within each duct to the radially inner, first region 61 of the gas permeable body 60. By progressively rotating the sleeve (not shown), the flow is progressively diverted via the outer flowpath portion outside the duct to the second region 62 until the second region 62 is fully heated to its operating temperature, as shown by the shading on the upstream surface 63 in Fig. 11.

The illustrated embodiment shows another possible configuration, wherein one or more ducts 71, 72 are provided to direct the flow of exhaust gas G to the gas permeable body 60 as described above, but instead of a rotatable sleeve, the or each duct 71, 72 is axially retractable and extendable in the flow direction F1 away from and towards the respective, upstream or downstream surface 63, 64 of the gas permeable body 60.

In the extended position (Fig. 7) the flow of exhaust gas G is mostly or wholly confined to the radially inner, first region 61 of the block. By retracting the duct or ducts towards the position of Fig. 8, the proportion of the flow through the first region is progressively reduced and the proportion of the flow through the second region 62 is progressively increased.

The flow diverter mechanism 70 may be operable by one or more electric, pneumatic or other actuators controlled by a controller 43 with sensor input 42 and processing capability, for example, generally as described (mutatis mutandis) with reference to the first embodiment.

Alternatively, a mechanical actuator (not shown) may be arranged to operate the flow diverter mechanism 70, for example, responsive to thermal expansion of an actuator element.

For example, an actuator element (not shown) may be arranged to operate the flow diverter mechanism (e.g. a sleeve or sleeves, or duct or ducts, as described above) by thermal expansion of the actuator element, also providing a restoring force to return the sleeve or duct to the extended position by contraction on cooling. Such actuator element may be coupled (directly or indirectly) to the gas permeable body 60, or may be arranged downstream of the gas permeable body 60 to expand and contract responsive to the downstream exhaust gas temperature and hence to the varying absorption of heat energy by the block as the temperature of the block changes. Such actuator element could be shaped for example as a helix or coil, or in any other convenient form.

Referring to Fig. 14, when commencing treatment from a cold condition of the gas permeable body 60, the second apparatus may be operated in accordance with a startup routine as shown, which (as discussed above with reference to the startup routine of Fig. 13) is simplified to reflect the simple, binary structure of the illustrated example.

At step 201, the flow diverter mechanism 70 is operated to direct the flow of exhaust gas G (wholly or mostly) through the first region 61.

At step 202, after the flow has heated the first region 61 to its minimum operating temperature, the flow diverter mechanism is operated to reduce the proportion of the flow through the first region 61 so that the flow is shared between the first and second regions 61, 62.

The second region 62 is heated to its operating temperature by thermal conduction from the first region 61 and directly by the exhaust gas flow. Thus, by extending the duration of step 201 and delaying step 202, the exhaust gas treatment system may provide fully effective or nearly fully effective treatment while it transitions from step 201 to step 202.

For example, where the system is configured for SCR, injection of DEF into the flowpath 51 upstream of the gas permeable body 60 may commence during or at the end of step 201 and may continue during step 202.

At step 202, the proportion of the flow through the first region 61 may be reduced progressively while the flow progressively heats the second region 62 to the operating temperature.

Where as shown the second region 62 surrounds the first region 61, progressive reduction of the proportion of the flow to the first region 61 and increase of the proportion of the flow to the second region 62 may be extended over a period sufficient to ensure that the exhaust gas G flows through that part of the second region 62 that has already reached its operating temperature by conduction. Thus, the flow is gradually expanded radially outwardly so that DEF injection can continue while substantially avoiding ammonia slip until the entire block has reached the minimum operating temperature.

In both the first and second embodiments, DEF injection (e.g. from a pump or other pressurised source of DEF) may be initiated and controlled by the controller 43.

The exhaust gas source 1 may comprise for example a combustor or an internal combustion engine, for example, a gas fuelled or diesel fuelled engine, which may be configured as a prime mover in a ship, locomotive or road vehicle, or in various stationary applications.

Optionally in each of the first embodiment and the second arrangement, the flow diverter mechanism 40, 70 may be arranged to divert the flow entirely through the first region (or through at least the first region) but not through the second region when the exhaust gas source 1 is operating below a certain proportion (for example, below about 80%, or about 70%, or about 60%) of full capacity. This makes it possible to maintain fully effective exhaust gas treatment by maintaining the whole section area of the operational region (or regions) of the at least one gas permeable body at or above the minimum operating temperature, even when the exhaust gas flow is reduced.

Preferably therefore the exhaust gas source 1 is operable at not less than 60% of full capacity when all of the flow of exhaust gas from the exhaust gas source is directed through at least the first region but not the second region.

Conveniently, the controller 43 (which may comprise for example the engine control unit or ECU) may restrict the engine or other exhaust gas source 1 to operate on part load to prevent operation on full load (for example, defining a maximum power output of up to about 60% or about 70% or about 80% of full load) during the warm-up phase. Alternatively a warning indicator may be provided to indicate when the exhaust gas treatment system is capable of operating on full engine load.

### Industrial Applicability

By concentrating the exhaust gas flow on a first region of the at least one gas permeable body and then diverting the flow to a second region as explained in accordance with either aspect of the disclosure, the flow is better distributed over the entire section area of each region of the at least one gas permeable body which is exposed to the flow. The gas permeable body is thus raised to its operating temperature more quickly over its entire active section area, which may reduce the occurrence of emissions due to the persistence of cooler regions of the section area on startup.

The novel startup routine may be useful in reducing emissions during the warm-up period after a cold start from any exhaust gas treatment system that comprises a gas permeable block that is required to reach a minimum operating temperature in order to be fully functional, including blocks forming a substrate for a catalyst.

An oxidation catalyst typically reaches its operating temperature relatively quickly, e.g. within about 2 minutes from a cold start. A reduction catalyst (for selective catalytic reduction) typically has a substrate with a larger thermal mass and so may take longer to reach its operating temperature, typically around 5 - 6 minutes from a cold start, so that the period of reduced efficiency is relatively longer. Thus, the novel startup routine may be particularly beneficial in SCR systems due to their relatively longer warm-up period, and particularly for repeated, short cycle operations.

By dividing the total section area of the at least one gas permeable body into at least two flowpath portions, the section area of the at least one gas permeable body in each of the flowpath portions (normal to the flow direction) is divided by the same factor; thus for example, two separate gas permeable bodies may halve the section area ratio between the gas permeable body and the exhaust gas duct upstream of the gas permeable body, from a ratio in the range from about 4:1 to 7:1 as typical of a single prior art reactor, to a ratio in the range from about 2:1 to 3·5:1. This further helps to distribute the flow over the section area of each region of the at least one gas permeable body, particularly in larger assemblies with a noncircular (e.g. square or rectangular) configuration.

Dividing the section area into discrete flowpath portions, each defining a reduced section area ratio between the block and the exhaust gas inlet, also makes possible a more even distribution of DEF across the section area of each block from a single injection nozzle, without the use of a distribution plate which complicates the assembly and can restrict the flow of exhaust gas. This in turn allows a reduction in the amount of catalyst required, and also a reduced consumption of DEF.

Where the engine is for example a stationary engine or a ship's engine and so is designed for extended or continuous duty, dividing the blocks between different reactors also allows one reactor to be removed for cleaning or replacement at its planned service interval (which may be about 8000 hours or more) while the engine continues to run, so overall availability is improved.

A modular arrangement with multiple reactors can also reduce the total manufacturing cost of the assembly in large engines. **In** combination with the reduced DEF consumption and the avoidance of costs resulting from servicing downtime, this can substantially improve the overall economic efficiency of a large stationary engine.

The novel startup routine may obviate the need for additional heating means, so reducing cost and complexity as well as overall energy requirement of the treatment system. However, additional heating means, for example, electrical heating elements or liquid or gas fuel inlets, e.g. injectors (the fuel being combusted in the flowpath) may be included in the flowpath and/or in, on or around the or each gas permeable body in order to further reduce the thermal response time of the system.

**In** summary, an exhaust gas treatment system comprises at least one gas permeable body, which may comprise an SCR catalyst, and a mechanism for diverting the flow of exhaust gas selectively to a first region and then to a second region of the body, the regions defining different portions of the section area of the body normal to the flow direction. The flow may be directed exclusively to each of the first and second regions in turn until each region reaches its operating temperature, and then divided between the first and second regions. Alternatively, in another arrangement, not claimed, the first and second regions may be thermally coupled and the flow directed to the first region and then divided between both regions after the first region has reached its operating temperature.

Many further adaptations are possible within the scope of the claims.

In the claims, reference numerals and characters in parentheses are provided purely for ease of reference and are not to be construed as limiting features.

## Claims

1. An apparatus (20) for treating a flow of exhaust gas, including:
at least one gas permeable body (10A; 10B), the at least one gas permeable body having at least one upstream surface (15), at least one downstream surface (16), and a total section area normal to the flow;
a flowpath (21) for directing the flow to enter the at least one gas permeable body (10A; 10B) via the at least one upstream surface (15) and to flow through the at least one gas permeable body (10A; 10B) from the at least one upstream surface (15) to the at least one downstream surface (16) to heat the at least one gas permeable body (10A; 10B) to an operating temperature; and
a flow diverter mechanism (40) operable to selectively divert the flow between at least first and second regions (10A; 10B) of the at least one gas permeable body, the first and second regions (10A; 10B) defining respective, first and second portions of the total section area;
**characterised in that**
the flow diverter mechanism (40) is arranged, when commencing treatment from a cold condition of the at least one gas permeable body:
(i) to direct at least a major proportion of the flow through at least the first region (10A) but not the second region (10B) to heat the first region (10A) to the operating temperature; and then, after the first region (10A) has reached the operating temperature,
(ii) to direct at least a major proportion of the flow through at least the second region (10B) but not the first region (10A) to heat the second region (10B) to the operating temperature; and then, after the second region (10B) has reached the operating temperature,
(iii) to reduce the proportion of the flow through the second region (10B) and to direct a proportion of the flow through the first region (10A) so that the flow is shared between the first and second regions (10A, 10B).

2. An apparatus according to claim 1, wherein the first and second regions (10A, 10B) are coupled in thermally conductive relation.

3. An apparatus according to claim 1, wherein the first and second regions (10A, 10B) comprise respectively, first and second assemblies of gas permeable blocks (11); and the flow diverter mechanism (40) is configured to selectively isolate each of the first and second assemblies (10A, 10B) to permit removal and replacement of each respective one of the first and second assemblies (10A, 10B) while the flow is diverted through at least the other respective one of the first and second assemblies (10A, 10B).

4. An apparatus according to claim 3, wherein the flowpath (21) is divided by a barrier wall (24) between a first flowpath portion (25) extending through the first assembly (10A), and a second flowpath portion (26) extending through the second assembly (10B), and the first and second assemblies (10A, 10B) are thermally coupled together via the barrier wall (24).

5. An apparatus according to claim 3, wherein each of the first and second assemblies (10A, 10B) has a noncircular cross-section normal to the flow.

6. An apparatus according to claim 1, wherein a first catalyst (14) is distributed in or on the at least one gas permeable body across both of the first and second regions (10A, 10B).

7. An apparatus according to claim 6, wherein the first catalyst (14) is a selective catalytic reduction (SCR) catalyst, and a reducing agent (81) is introduced into the flow of exhaust gas (G) upstream of the at least one gas permeable body (10A, 10B).

8. An apparatus (20) according to claim 1, including an exhaust gas source (1) operable at not less than 60% of full capacity when all of the flow of exhaust gas (G) from the exhaust gas source (1) is directed through at least the first region (10A) but not the second region (10B).

9. A method of treating a flow of exhaust gas (G), including:
providing at least one gas permeable body (10A, 10B), the at least one gas permeable body (10A, 10B) having at least one upstream surface (15), at least one downstream surface (16), and a total section area normal to the flow (F1);
directing the flow (F1) to enter the at least one gas permeable body (10A, 10B) via the at least one upstream surface (15) and to flow through the at least one gas permeable body (10A, 10B) from the at least one upstream surface (15) to the at least one downstream surface (16) to heat the at least one gas permeable body (10A, 10B) to an operating temperature; and
selectively diverting the flow between at least first and second regions (10A, 10B) of the at least one gas permeable body, the first and second regions (10A, 10B) defining respective, first and second portions of the total section area;
and **characterised by**, when commencing treatment from a cold condition of the at least one gas permeable body:
(i) directing at least a major proportion of the flow through at least the first region (10A) but not the second region (10B) to heat the first region (10A) to the operating temperature; and then, after the first region (10A) has reached the operating temperature,
(ii) directing at least a major proportion of the flow through at least the second region (10B) but not the first region (10A) to heat the second region (10B) to the operating temperature; and then, after the second region (10B) has reached the operating temperature,
(iii) reducing the proportion of the flow through the second region (10B) and directing a proportion of the flow through the first region (10A) so that the flow is shared between the first and second regions (10A, 10B).

10. A method according to claim 9, wherein a first catalyst (14) is distributed in or on the at least one gas permeable body across both of the first and second regions (10A, 10B), the first catalyst being a selective catalytic reduction catalyst; and
introduction of a reducing agent (81) into the flow of exhaust gas upstream of the at least one gas permeable body (10A, 10B) is initiated when reducing the proportion of the flow through the second region (10B) and directing a proportion of the flow through the first region (10A) so that the flow is shared between the first and second regions (10A, 10B).

## Patentansprüche

1. Einrichtung (20) zum Behandeln eines Abgasstroms, die Folgendes einschließt:
mindestens einen gasdurchlässigen Körper (10A; 10B), wobei der mindestens eine gasdurchlässige Körper mindestens eine stromaufwärts gelegene Oberfläche (15), mindestens eine stromabwärts gelegene Oberfläche (16) und eine Gesamtquerschnittsfläche senkrecht zur Strömung aufweist;
einen Strömungsweg (21), um den Strom so zu leiten, dass er über die mindestens eine stromaufwärts gelegene Oberfläche (15) in den mindestens einen gasdurchlässigen Körper (10A; 10B) eintritt und von der mindestens einen stromaufwärts gelegenen Oberfläche (15) durch den mindestens einen gasdurchlässigen Körper (10A; 10B) zu der mindestens einen stromabwärts gelegenen Oberfläche (16) strömt, um den mindestens einen gasdurchlässigen Körper (10A; 10B) auf eine Betriebstemperatur zu erhitzen; und
einen Strömungsumleitungsmechanismus (40), der den Strom selektiv zwischen mindestens einem ersten und einem zweiten Bereich (10A; 10B) des mindestens einen gasdurchlässigen Körpers umleiten kann, wobei der erste und der zweite Bereich (10A; 10B) jeweils einen ersten und einen zweiten Abschnitt der gesamten Querschnittsfläche definieren;
**dadurch gekennzeichnet, dass**
der Strömungsumleitungsmechanismus (40) so angeordnet ist, dass bei Beginn der Behandlung aus einem kalten Zustand des mindestens einen gasdurchlässigen Körpers Folgendes erfolgt:
(i) Leiten von mindestens einem Großteil des Stroms durch mindestens den ersten Bereich (10A), aber nicht durch den zweiten Bereich (10B), um den ersten Bereich (10A) auf die Betriebstemperatur zu erhitzen; und dann, nachdem der erste Bereich (10A) die Betriebstemperatur erreicht hat,
(ii) Leiten von mindestens einen Großteil des Stroms durch mindestens den zweiten Bereich (10B), jedoch nicht durch den ersten Bereich (10A), um den zweiten Bereich (10B) auf die Betriebstemperatur zu erhitzen; und dann, nachdem der zweite Bereich (10B) die Betriebstemperatur erreicht hat,
(iii) Reduzieren des Anteils des Stroms durch den zweiten Bereich (10B) und Leiten eines Anteils des Stroms durch den ersten Bereich (10A), so dass der Strom auf den ersten und dem zweiten Bereich (10A, 10B) aufgeteilt wird.

2. Einrichtung nach Anspruch 1, wobei der erste und der zweite Bereich (10A, 10B) in thermisch leitfähiger Beziehung gekoppelt sind.

3. Einrichtung nach Anspruch 1, wobei der erste und der zweite Bereich (10A, 10B) jeweils eine erste und eine zweite Anordnung gasdurchlässiger Blöcke (11) umfassen; und der Strömungsumleitungsmechanismus (40) so konfiguriert ist, dass er selektiv jede der ersten und der zweiten Anordnung (10A, 10B) isoliert, um das Entfernen und Ersetzen jeweils einer der ersten und zweiten Anordnung (10A, 10B) zu ermöglichen, während der Strom durch mindestens die jeweils andere der ersten und zweiten Anordnung (10A, 10B) umgeleitet wird.

4. Einrichtung nach Anspruch 3, wobei der Strömungsweg (21) durch eine Barrierewand (24) in einen ersten Strömungswegabschnitt (25), der durch die erste Anordnung (10A) verläuft, und einen zweiten Strömungswegabschnitt (26), der durch die zweite Anordnung (10B) verläuft, unterteilt ist, und die erste und die zweite Anordnung (10A, 10B) über die Barrierewand (24) thermisch miteinander gekoppelt sind.

5. Einrichtung nach Anspruch 3, wobei jeder der ersten und zweiten Anordnung (10A, 10B) einen nicht kreisförmigen Querschnitt senkrecht zum Strom aufweisen.

6. Einrichtung nach Anspruch 1, wobei ein erster Katalysator (14) in oder auf dem mindestens einen gasdurchlässigen Körper über sowohl den ersten als auch den zweiten Bereich (10A, 10B) verteilt ist.

7. Einrichtung nach Anspruch 6, wobei der erste Katalysator (14) ein selektiver katalytischer Reduktionskatalysator (SCR) ist und ein Reduktionsmittel (81) in den Abgasstrom (G) stromaufwärts des mindestens einen gasdurchlässigen Körpers (10A, 10B) eingeführt wird.

8. Einrichtung (20) nach Anspruch 1, die eine Abgasquelle (1) einschließt, die mit nicht weniger als 60 % ihrer vollen Kapazität betrieben werden kann, wenn der gesamte Abgasstrom (G) von der Abgasquelle (1) mindestens durch den ersten Bereich (10A), nicht jedoch durch den zweiten Bereich (10B) geleitet wird.

9. Verfahren zum Behandeln eines Abgasstroms (G), das Folgendes einschließt:
Bereitstellen von mindestens einem gasdurchlässigen Körper (10A, 10B), wobei der mindestens eine gasdurchlässige Körper (10A, 10B) mindestens eine stromaufwärtige Oberfläche (15), mindestens eine stromabwärtige Oberfläche (16) und eine Gesamtquerschnittsfläche senkrecht zum Strom (F1) aufweist;
Umleiten des Stroms (F1), so dass er über die mindestens eine stromaufwärts gelegene Oberfläche (15) in den mindestens einen gasdurchlässigen Körper (10A, 10B) eintritt und von der mindestens einen stromaufwärts gelegenen Oberfläche (15) durch den mindestens einen gasdurchlässigen Körper (10A, 10B) zu der mindestens einen stromabwärts gelegenen Oberfläche (16) strömt, um den mindestens einen gasdurchlässigen Körper (10A, 10B) auf eine Betriebstemperatur zu erhitzen; und
selektives Umleiten des Stroms zwischen mindestens einem ersten und einem zweiten Bereich (10A, 10B) des mindestens einen gasdurchlässigen Körpers, wobei der erste und der zweite Bereich (10A, 10B) jeweils einen ersten und einen zweiten Abschnitt der gesamten Querschnittsfläche definieren;
und **gekennzeichnet durch**: wenn die Behandlung im kalten Zustand des mindestens einen gasdurchlässigen Körpers begonnen wird:
(i) Leiten von mindestens einem Großteil des Stroms durch mindestens den ersten Bereich (10A), jedoch nicht durch den zweiten Bereich (10B), um den ersten Bereich (10A) auf die Betriebstemperatur zu erhitzen; und dann, nachdem der erste Bereich (10A) die Betriebstemperatur erreicht hat,
(ii) Leiten von mindestens einem Großteil des Stroms durch mindestens den zweiten Bereich (10B), jedoch nicht durch den ersten Bereich (10A), um den zweiten Bereich (10B) auf die Betriebstemperatur zu erhitzen; und dann, nachdem der zweite Bereich (10B) die Betriebstemperatur erreicht hat,
(iii) Reduzieren des Anteils des Stroms durch den zweiten Bereich (10B) und Leiten eines Anteils des Stroms durch den ersten Bereich (10A), so dass der Strom auf den ersten und den zweiten Bereich (10A, 10B) aufgeteilt wird.

10. Verfahren nach Anspruch 9, wobei ein erster Katalysator (14) in oder auf dem mindestens einen gasdurchlässigen Körper über sowohl den ersten als auch den zweiten Bereich (10A, 10B) verteilt ist, wobei der erste Katalysator ein Katalysator zur selektiven katalytischen Reduktion ist; und
das Einführen eines Reduktionsmittels (81) in den Abgasstrom stromaufwärts des mindestens einen gasdurchlässigen Körpers (10A, 10B) eingeleitet wird, wenn der Anteil des Stroms durch den zweiten Bereich (10B) reduziert wird und ein Anteil des Stroms durch den ersten Bereich (10A) geleitet wird, so dass der Strom zwischen dem ersten und dem zweiten Bereich (10A, 10B) aufgeteilt wird.

## Revendications

1. . Appareil (20) permettant de traiter un flux de gaz d'échappement, comportant :
au moins un corps perméable aux gaz (10A; 10B), l'au moins un corps perméable aux gaz ayant au moins une surface amont (15), au moins une surface aval (16), et une aire totale de section perpendiculaire au flux ;
une trajectoire de flux (21) permettant de diriger le flux pour qu'il entre dans l'au moins un corps perméable aux gaz (10A; 10B) par l'intermédiaire de l'au moins une surface amont (15) et traverse l'au moins un corps perméable aux gaz (10A; 10B) à partir de l'au moins une surface amont (15) jusqu'à l'au moins une surface aval (16) pour chauffer l'au moins un corps perméable aux gaz (10A; 10B) à une température de fonctionnement ; et
un mécanisme de déviation de flux (40) fonctionnel pour dévier sélectivement le flux entre au moins des première et seconde régions (10A; 10B) de l'au moins un corps perméable aux gaz, les première et seconde régions (10A; 10B) définissant des première et seconde parties respectives de l'aire totale de section ;
**caractérisé en ce que**
le mécanisme de déviation de flux (40) est agencé, lorsque l'on commence un traitement à partir d'une condition froide de l'au moins un corps perméable aux gaz :
(i) pour diriger au moins une proportion majeure du flux à travers au moins la première région (10A) mais pas la seconde région (10B) pour chauffer la première région (10A) à la température de fonctionnement ; puis, après que la première région (10A) a atteint la température de fonctionnement,
(ii) pour diriger au moins une proportion majeure du flux à travers au moins la seconde région (10B) mais pas la première région (10A) pour chauffer la seconde région (10B) à la température de fonctionnement ; puis, après que la seconde région (10B) a atteint la température de fonctionnement,
(iii) pour réduire la proportion du flux à travers la seconde région (10B) et pour diriger une proportion du flux à travers la première région (10A) de sorte que le flux est partagé entre les première et seconde régions (10A, 10B).

2. . Appareil selon la revendication 1, dans lequel les première et seconde régions (10A, 10B) sont accouplées dans une relation thermoconductrice.

3. . Appareil selon la revendication 1, dans lequel les première et seconde régions (10A, 10B) comprennent respectivement, des premier et second ensembles de blocs perméables aux gaz (11) ; et le mécanisme de déviation de flux (40) est conçu pour isoler sélectivement chacun des premier et second ensembles (10A, 10B) pour permettre un retrait et un remplacement de chaque ensemble respectif parmi les premier et second ensembles (10A, 10B) alors que le flux est dévié à travers au moins l'autre ensemble respectif parmi les premier et second ensembles (10A, 10B).

4. . Appareil selon la revendication 3, dans lequel la trajectoire de flux (21) est divisée par une paroi barrière (24) entre une première partie de trajectoire de flux (25) s'étendant à travers le premier ensemble (10A), et une seconde partie de trajectoire de flux (26) s'étendant à travers le second ensemble (10B), et les premier et second ensembles (10A, 10B) sont accouplés thermiquement ensemble par l'intermédiaire de la paroi barrière (24).

5. . Appareil selon la revendication 3, dans lequel chacun des premier et second ensembles (10A, 10B) a une section transversale non circulaire perpendiculaire au flux.

6. . Appareil selon la revendication 1, dans lequel un premier catalyseur (14) est réparti dans ou sur l'au moins un corps perméable aux gaz à travers l'une et l'autre des première et seconde régions (10A, 10B).

7. . Appareil selon la revendication 6, dans lequel le premier catalyseur (14) est un catalyseur de réduction catalytique sélective (SCR), et un agent réducteur (81) est introduit dans le flux de gaz d'échappement (G) en amont de l'au moins un corps perméable aux gaz (10A, 10B).

8. . Appareil (20) selon la revendication 1, comportant une source de gaz d'échappement (1) fonctionnelle à pas moins de 60 % de la pleine capacité lorsque la totalité du flux de gaz d'échappement (G) provenant de la source de gaz d'échappement (1) est dirigée à travers au moins la première région (10A) mais pas la seconde région (10B).

9. . Procédé de traitement d'un flux de gaz d'échappement (G), comportant :
la fourniture d'au moins un corps perméable aux gaz (10A, 10B), l'au moins un corps perméable aux gaz (10A, 10B) ayant au moins une surface amont (15), au moins une surface aval (16), et une aire totale de section perpendiculaire au flux (F1) ;
le fait de diriger le flux (F1) pour qu'il entre dans l'au moins un corps perméable aux gaz (10A ; 10B) par l'intermédiaire de l'au moins une surface amont (15) et traverse l'au moins un corps perméable aux gaz (10A; 10B) à partir de l'au moins une surface amont (15) jusqu'à l'au moins une surface aval (16) pour chauffer l'au moins un corps perméable aux gaz (10A; 10B) à une température de fonctionnement ; et
la déviation sélective du flux entre au moins des première et seconde régions (10A, 10B) de l'au moins un corps perméable aux gaz, les première et seconde régions (10A, 10B) définissant des première et seconde parties respectives de l'aire totale de section ;
et **caractérisé par,** lorsque l'on commence un traitement à partir d'une condition froide de l'au moins un corps perméable aux gaz :
(i) le fait de diriger au moins une proportion majeure du flux à travers au moins la première région (10A) mais pas la seconde région (10B) pour chauffer la première région (10A) à la température de fonctionnement ; puis, après que la première région (10A) a atteint la température de fonctionnement,
(ii) le fait de diriger au moins une proportion majeure du flux à travers au moins la seconde région (10B) mais pas la première région (10A) pour chauffer la seconde région (10B) à la température de fonctionnement ; puis, après que la seconde région (10B) a atteint la température de fonctionnement,
(iii) la réduction de la proportion du flux à travers la seconde région (10B) et le fait de diriger une proportion du flux à travers la première région (10A) de sorte que le flux est partagé entre les première et seconde régions (10A, 10B).

10. . Procédé selon la revendication 9, dans lequel un premier catalyseur (14) est réparti dans ou sur l'au moins un corps perméable aux gaz à travers l'une et l'autre des première et seconde régions (10A, 10B), le premier catalyseur étant un catalyseur de réduction catalytique sélective ; et
l'introduction d'un agent réducteur (81) dans le flux de gaz d'échappement en amont de l'au moins un corps perméable aux gaz (10A, 10B) est initiée lorsque l'on réduit la proportion du flux à travers la seconde région (10B) et que l'on dirige une proportion du flux à travers la première région (10A) de sorte que le flux est partagé entre les première et seconde régions (10A, 10B).
